# EUROPEAN PATENT APPLICATION

(11) **EP 3 715 787 A1**
(43) Date of publication of application: **30.09.2020**
(21) Application number: 18896375.5
(22) Date of filing: 05.12.2018
(51) Int. Cl.: G01C 21/26, G08G 1/00, G06Q 10/04, G06Q 50/30

(54) **VEHICLE OPTIMIZATION SYSTEM AND VEHICLE OPTIMIZATION DEVICE**

(30) Priority: 27.12.2017 JP 2017252700
(71) Applicant: Hitachi, Ltd., Tokyo 100-8280 (JP)
(72) Inventor: NAGANO, Takehiko, Tokyo 100-8280 (JP); MORI, Takuro, Tokyo 100-8280 (JP); LOPEZ, Jairo, Tokyo 100-8280 (JP); HAYASHI, Ryosuke, Tokyo 100-8280 (JP)
(74) Representative: Manitz Finsterwald Patent- und Rechtsanwaltspartnerschaft mbB
(86) International application number: PCT/JP2018/044781
(87) International publication number: WO 2019/131027

(57) **Abstract**

Provided are a route information storage DB in which route information indicating a travel route for a vehicle is saved, a maintenance information storage DB in which maintenance information regarding maintenance of the vehicle is saved, an environment information storage DB in which environment information regarding the route is saved, a program storage DB in which a program to be used in the vehicle is saved, a computation unit that executes, based on the route information, the maintenance information, and the environment information, computing of evaluation indexes regarding optimization of travel control of the vehicle for respective cases each obtained by making a change in a program-parameter combination for the vehicle, and that determines a program-parameter combination which provides an optimal result among the computed results, and a communication unit that transmits, to the vehicle, the program-parameter combination determined by the computation unit.

## Description

### Technical Field

The present invention relates to a vehicle optimizing system and a vehicle optimizing apparatus, and is suitable to be applied to a vehicle optimizing system and a vehicle optimizing apparatus for optimizing travel control of a vehicle, for example.

### Background Art

The size of a program (on-vehicle program) installed in one automobile is so large in recent years that the program includes over one hundred million code lines. It is said that more than half of the cost of vehicles that were produced in 2015 was related to electronics components. Moreover, on-vehicle programs have become complicated in order to manage more advanced functions so that there are an increasing number of situations causing program bugs.

Troubles caused by on-vehicle programs have actually increased. A solution to this problem has been demanded. Program updating function SOTA (Software Update Over-The-Air) using a wireless network is expected to become a solution to this problem.

Meanwhile, the producer side including automobile OEMs (Original Equipment Manufacturers) and Tiers uses various tools, such as mechanical CAD (Computer-Aided Design), electronics CAD (electric system CAD), development of programs, and simulations, which are provided by a plurality of vendors.

As a result, even when a product data management (PDM) program of a mechanical CAD system is used, different tools are used for design of product parts, components, and the like. Accordingly, the mutual cooperation thereamong is difficult to discern.

In the case where mechanical components, electronics components, and program components are combined, the cooperation thereamong becomes complicated. A work of creating the entire design of a product on the basis of the complicated cooperation becomes more difficult.

The above circumstance has resulted in an increase of companies that are promoting introduction of PLM (Product Life-cycle Management) in light of improvement of productivity, ensuring of traceability in occurrence of a malfunction, and the like. Thus, making preparations for establishing an environment in which a life cycle including requested specifications, design specifications, a program, a manufacturing line, and the like. can be sequentially integrated, is well under way.

In addition, as a result of the appearance of hybrid cars, connected cars, and the like, there are an increasing number of technologies for receiving, at automobiles, external information to perform control. For example, a technology is disclosed in which an automobile itself acquires route information and driving information, and improves braking/driving force characteristics while suppressing fuel consumption according to conditions indicated by the information (see Patent Document 1).

### Prior Art Document

### Patent Document

Patent Document 1: JP-2003-9310-A

### Summary of the Invention

### Problem to be Solved by the Invention

As described above, there has been a method in which an automobile itself receives congestion information, route information, and the like over the internet or the like, thereby improves driving control. However, this method is provided to improve a parameter of a program that is already installed in a vehicle.

That is, a program that has been determined, under an evaluation criterion decided by an automobile manufacture, to be optimal for a target index, which is represented by a fuel efficiency, is preliminarily installed in a vehicle. There is a problem that travel control of the vehicle can be changed only within a range that is limited by a parameter of the program.

The present invention has been made in view of the aforementioned points, and suggests a vehicle optimizing system that can optimize travel control of a vehicle.

### Means for Solving the Problem

In order to solve the above problems, the present invention includes: a route information storage DB in which route information indicating a travel route for a vehicle is saved; a maintenance information storage DB in which maintenance information regarding maintenance of the vehicle is saved; an environment information storage DB in which environment information regarding the route is saved; a program storage DB in which a program to be used in the vehicle is saved; a computation unit that executes, based on the route information, the maintenance information, and the environment information, computing of evaluation indexes regarding optimization of travel control of the vehicle for respective cases each obtained by making a change in a program-parameter combination for the vehicle, and that determines a program-parameter combination which provides an optimal result among the computed results; and a communication unit that transmits, to the vehicle, the program-parameter combination determined by the computation unit.

With the above configuration, an effect to be provided by each program-parameter combination is preliminarily computed so that a program-parameter combination that is optimal for an evaluation index is determined.

### Advantages of the Invention

According to the present invention, travel control that is optimal for an evaluation index can be performed.

### Brief Description of the Drawings

FIG. 1 is a diagram depicting one example of a vehicle optimizing system according to a first embodiment.
FIG. 2 is a diagram depicting one example of a sensor according to the first embodiment.
FIG. 3 is a diagram depicting one example of a sensor according to the first embodiment.
FIG. 4 is a diagram depicting one example of a sensor according to the first embodiment.
FIG. 5 is a diagram depicting one example of an individual information management table according to the first embodiment.
FIG. 6 is a diagram depicting one example of a transmission information table according to the first embodiment.
FIG. 7 is a diagram depicting one example of an external service/external system information storage table according to the first embodiment.
FIG. 8 is a diagram depicting a maintenance information storage table according to the first embodiment.
FIG. 9 is a diagram depicting one example of a weather information storage table according to the first embodiment.
FIG. 10 is a diagram depicting one example of a route division information/congestion information storage table according to the first embodiment.
FIG. 11 is a diagram depicting one example of a route information storage table according to the first embodiment.
FIG. 12 is a diagram depicting one example of a program update candidate/parameter candidate storage table according to the first embodiment.
FIG. 13 is a diagram depicting one example of a replay information table according to the first embodiment.
FIG. 14 is a diagram depicting one example of a processing procedure regarding an information collecting process according to the first embodiment.
FIG. 15 is a diagram depicting one example of a processing procedure regarding a program/parameter determining process according to the first embodiment.
FIG. 16 is a diagram depicting one example of a processing procedure regarding an optimization executing process according to the first embodiment.
FIG. 17 is a diagram depicting one example of program and parameter switching according to the first embodiment.
FIG. 18 is a diagram depicting one example of a processing procedure regarding a re-optimization requesting process according to the first embodiment.
FIG. 19 is a diagram depicting one example of a processing procedure regarding a real-time information collecting process according to a second embodiment.
FIG. 20 is a diagram depicting one example of a processing procedure regarding a real-time information collecting process according to the second embodiment.

### Modes for Carrying Out the Invention

Hereinafter, one embodiment of the present invention will be described in detail with reference to the drawings.

### (1) First embodiment

A vehicle optimizing system according to the present embodiment optimizes travel control of a vehicle (e.g., an automobile or a motorbike), by collecting (acquiring) maintenance information on maintenance of the vehicle, environment information such as weather and road conditions, route information such as a destination, and the like, by selecting a program-parameter combination (set) that realizes an optimal target index (evaluation index) such as a fuel efficiency or riding comfortability, through a model inspection and/or a simulation on the basis of the collected information and design information about the vehicle, and by delivering the program-parameter combination to the vehicle. Hereinafter, a detailed explanation of this will be given.

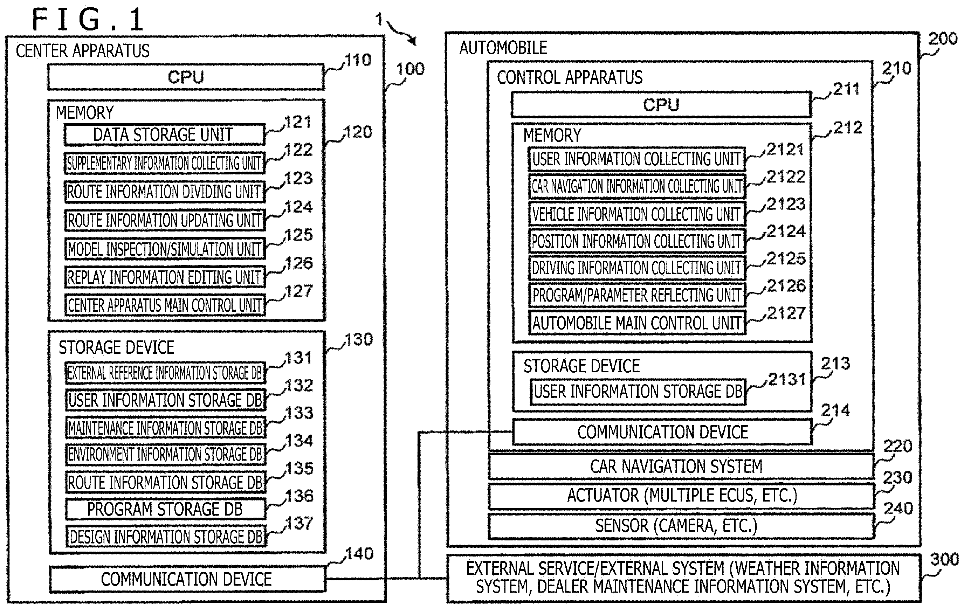

In FIG. 1, reference numeral 1 denotes a vehicle optimizing system according to the first embodiment. The vehicle optimizing system 1 is a PLM system or the like of an automobile manufacturer (OEM), and is formed so as to include a center apparatus 100.

The center apparatus 100 is one example of a vehicle optimizing apparatus, and optimizes a program and a parameter of an automobile 200 that is a target to be optimized, on the basis of information acquired from the automobile 200 and information acquired from an external service/external system 300 that provides information for assisting optimization in the center apparatus 100.

The center apparatus 100 is an information processing apparatus (computer) or the like, and is formed so as to include a CPU (Central Processing Unit) 110, a memory 120 such as a ROM (Read Only Memory) or a RAM (Random Access Memory), a storage device 130 such as an HDD (Hard Disk Drive) or an SSD (Solid State Drive), and a communication device 140.

The CPU 110 reads out a program stored in the storage device 130 to the memory 120 and executes the program, whereby any one of the functions (a data storage unit 121, a supplementary information collecting unit 122, a route information dividing unit 123, a route information updating unit 124, a model inspection/simulation unit 125, a reply information editing unit 126, a center apparatus main control unit 127, and the like) of the center apparatus 100 is implemented.

Various types of information (programs for implementing the functions of the center apparatus 100, an external reference information storage DB 131, a user information storage DB 132, a maintenance information storage DB 133, an environment information storage DB 134, a route information storage DB 135, a program storage DB 136, a design information storage DB 137, and the like) are stored in the storage device 130.

Information that is necessary to make access to the external service/external system 300 is saved (stored) in the external reference information storage DB 131. User information transmitted from the automobile 200, and the like are saved in the user information storage DB 132. Information about maintenance of the automobile 200 is saved in the maintenance information storage DB 133. Environment information such as weather is saved in the environment information storage DB 134. Various types of information (route information, map information, and the like) on a route from a departure place to a destination are saved in the route information storage DB 135.

Some or all of executable programs, source codes, and the like, which are used in a vehicle including the automobile 200, is saved (stored) in the program storage DB 136 at shipment or after shipment. In the program storage DB 136, one or more programs are provided for each ECU of the automobile 200. It is to be noted that one or more parameters may be provided for each of the programs, or a parameter may be generated, as appropriate, so as to satisfy a prescribed condition. A model (operation model) for inspecting operations and a simulator created at the time of designing and used, and the like, are saved in the design information storage DB 137.

The communication device 140 is formed of an NIC (Network Interface Card), for example, and performs protocol control during communication with the automobile 200. The communication device 140 receives, from the automobile 200, information that is necessary to optimize the automobile 200, an optimization request, and the like, and transmits an optimized program and an optimized parameter to the automobile 200.

The data storage unit 121 receives user information, vehicle information, and the like, from the automobile 200, and saves the information in the user information storage DB 132, the maintenance information storage DB 133, and the like.

The supplementary information collecting unit 122 sends, to the external service/external system 300, an inquiry about information that is necessary for optimization when the information received from the automobile 200 is insufficient, by using the external reference information storage DB 131, and saves the supplementary information in the maintenance information storage DB 133 and the environment information storage DB 134, the route information storage DB 135, and the like.

The route information dividing unit 123 classifies travel routes according to the route information transmitted from the automobile 200 into representative route patterns or the like (for example, divides the route information in prescribed units).

The route information updating unit 124 updates information (information for each of the divided route information sets) that is necessary to analyze the route information transmitted from the automobile 200 on the basis of the information in the user information storage DB 132, the information in the maintenance information storage DB 133, and the information in the environment information storage DB 134.

The model inspection/simulation unit 125 is one example of a computation unit that performs various computations, and executes a computation regarding an evaluation index by conducting a model inspection and/or a simulation (operation verification under a test environment) on the basis of the user information, the maintenance information, the environment information, the route information, and the like, the design information (the operation model, the simulator, and the like), and information about an executable program and a parameter for setting the program, and determines a program-parameter combination that is optimal for the evaluation index on the basis of the computed result.

The reply information editing unit 126 edits the determined program and parameter into a format that is executable in accordance with the travel route for the automobile 200.

The center apparatus main control unit 127 performs general control in the center apparatus 100.

The automobile 200 is one example of a vehicle that is an optimization target, and receives programs and parameters delivered from the center apparatus 100, and travels while dynamically switching the received programs and parameters.

The automobile 200 includes a control apparatus 210, a car navigation system 220, an actuator 230, sensors 240, and the like.

The control apparatus 210 is a gateway apparatus or the like, and has charge of controlling communication which is performed by the automobile 200 during driving (which may be driving based on a user's driving operation or may be automatic driving). The control apparatus 210 is formed so as to include a CPU 211, a memory 212, a storage device 213, and a communication device 214.

The CPU 211 reads out a program stored in the memory 212 and executes the program, whereby any one of the functions (a user information collecting unit 2121, a car navigation information collecting unit 2122, a vehicle information collecting unit 2123, a position information collecting unit 2124, a driving information collecting unit 2125, a program/parameter reflecting unit 2126, an automobile main control unit 2127, and the like) of the automobile 200 is implemented.

The user information collecting unit 2121 collects user information (fingerprint information, face information, or the like, with which a user can be identified), such as a fingerprint image or a face image, that is necessary to identify a user.

The car navigation information collecting unit 2122 collects route information indicating a departure place, a destination, a route, and the like, that are necessary for the center apparatus 100 side to optimize a program of the automobile 200.

The vehicle information collecting unit 2123 collects vehicle information (one example of maintenance information), such as a number, a vehicle number, a use period, a travel distance, a date of oil exchange, and a distance traveled after oil exchange, indicating the use condition of the automobile 200.

The position information collecting unit 2124 collects position information indicating a position that represents which area the automobile 200 is currently travelling.

The driving information collecting unit 2125 collects driving information (an accelerator stepping-on timing, a brake stepping-on timing, and the like) indicating user's driving-time characteristics.

The program/parameter reflecting unit 2126 updates a program and a parameter delivered from the center apparatus 100.

The automobile main control unit 2127 performs general control in the automobile 200.

Various types of information (programs for implementing the functions of the automobile 200, a user information storage DB 2131, and the like) are stored in the storage device 213. User information and driving information, and the like, about a user who drives the automobile 200 are saved in the user information storage DB 2131.

The communication device 214 is formed of an NIC, for example, and performs protocol control during communication with the center apparatus 100. For example, the communication device 214 transmits, to the center apparatus 100, information that is necessary to optimize the automobile 200 and an optimization request, and receives, from the center apparatus 100, a program and a parameter optimized by the center apparatus 100.

The car navigation system 220 is a device that performs a guide to a destination set by a user. The car navigation system 220 calculates a route to be traveled by the automobile 200 on the basis of map information and position information about the automobile 200 measured by a GPS reception unit (not depicted). For example, the car navigation system 220 calculates a target route from the position of the automobile 200 to the destination, and issues a notification about the target route through display on a display (not depicted) or a sound output from a loudspeaker (not depicted). The car navigation system 220 transmits information about the target route to the car navigation information collecting unit 2122.

The actuator 230 is a device that controls behaviors, such as acceleration, deceleration, and steering, of the automobile 200 during driving. The actuator 230 includes a plurality of ECUs (Electronic Control Units) for controlling devices such as an engine, a motor, a meter, a transmission, a brake, an air bag, lamps, a power steering device, automatic windows, a car air conditioner, a vehicle-side electronic key reception part, and a car audio.

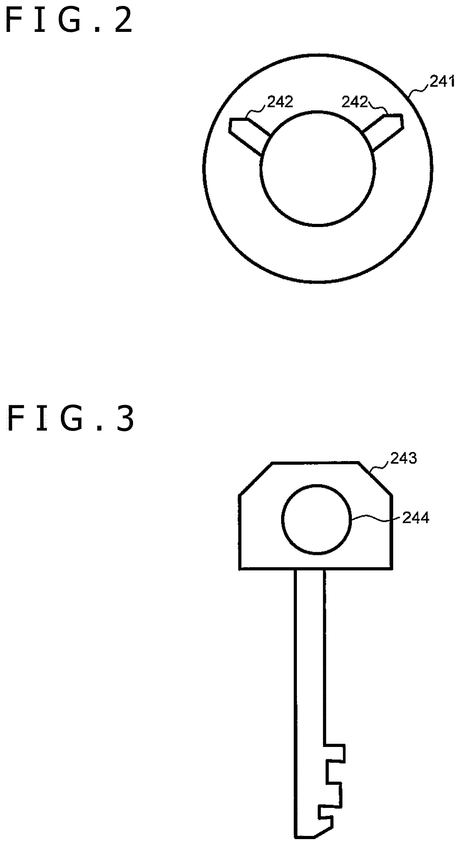

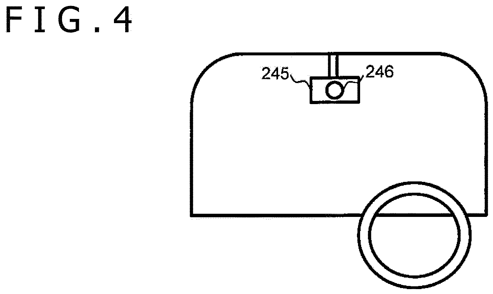

The sensors 240 are detectors that each detect an outside condition, which is information about the periphery of the automobile 200, and include a fingerprint sensor 242 (FIG. 2) that is provided to a steering wheel 241 or the like, a receiver that receives information from a fingerprint sensor 244 (FIG. 3) provided to an electronic key 243 or the like, a camera 246 (FIG. 4) that is provided to a rearview mirror 245 or the like, and a radar that is capable of measuring the distance to an object.

The external service/external system 300 is formed so as to include a weather information distribution system, a Web system that provides a function comparable to that of the weather information distribution system, and a maintenance information system that is installed in an automobile dealer or the like.

FIG. 2 is a diagram depicting one example of a sensor (the fingerprint sensor 242) that acquires information with which a user can be identified. In the present embodiment, the fingerprint sensor 242, which extends from the front side to the rear side of the steering wheel 241, is provided in an appropriate position so as to have an appropriate size and an appropriate range, and acquires information regarding a fingerprint of an arbitrary finger such as a thumb or an index finger.

FIG. 3 is a diagram depicting one example of a sensor (the fingerprint sensor 244) that acquires information with which a user can be identified. In the present embodiment, the fingerprint sensor 244 is set at a to-be-grasped position of the electronic key 243, and acquires information regarding a fingerprint of an arbitrary finger such as a thumb or an index finger.

FIG. 4 is a diagram depicting one example of a sensor (the camera 246) that acquires information with which a user can be identified. In the present embodiment, the camera 246 is provided to the rearview mirror 245, and acquires an image of a face, a pupil, or the like.

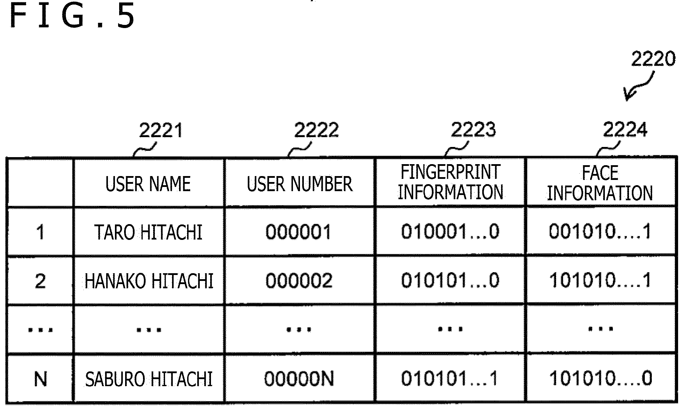

FIG. 5 is a diagram depicting one example of an individual information management table (an individual information management table 2220) that is provided in the user information storage DB 2131 stored (installed) in the automobile 200. A user name 2221 indicating a user who drives the automobile 200, a user number 2222 indicating a management number with which the user can be identified, fingerprint information 2223 indicating a fingerprint of the user, face information 2224 indicating the face of the user, are stored in association with one another in the individual information management table 2220. It is assumed that the information is preliminarily registered at a time, such as an automobile purchase time, before the user commences usage of the automobile 200.

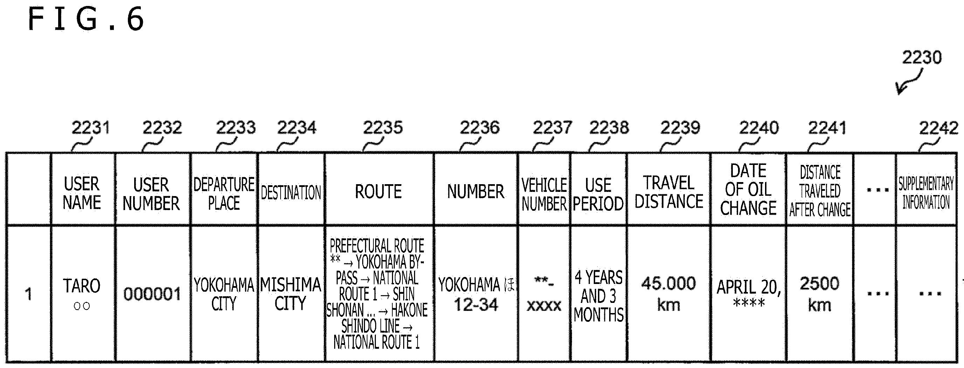

FIG. 6 is a diagram depicting one example of a transmission information table (a transmission information table 2230) indicating information (transmission information) that is transmitted from the automobile 200 to the center apparatus 100 and that is necessary to optimize automobile 200. FIG. 6 depicts one form of a data packet to be exchanged between the center apparatus 100 and the automobile 200.

Information including a user name 2231, a user number 2232, a departure place 2233 of the automobile 200, a destination 2234 of the automobile 200, a route 2235 indicating a route from the departure place 2233 to the destination 2234, a number 2236 indicating the number of the automobile 200, a vehicle number 2237 indicating a number specific to the automobile 200, a use period 2238 indicating the use period of the automobile 200, a travel distance 2239 indicating the travel distance of the automobile 200, a date of oil change 2240 indicating the date of the last oil change of the automobile 200, a travel distance 2241 indicating a distance traveled by the automobile 200 after the oil change, and supplementary information 2242 serving as a supplement to the use condition of the automobile 200, which are in association with one another, is stored in the transmission information table 2230.

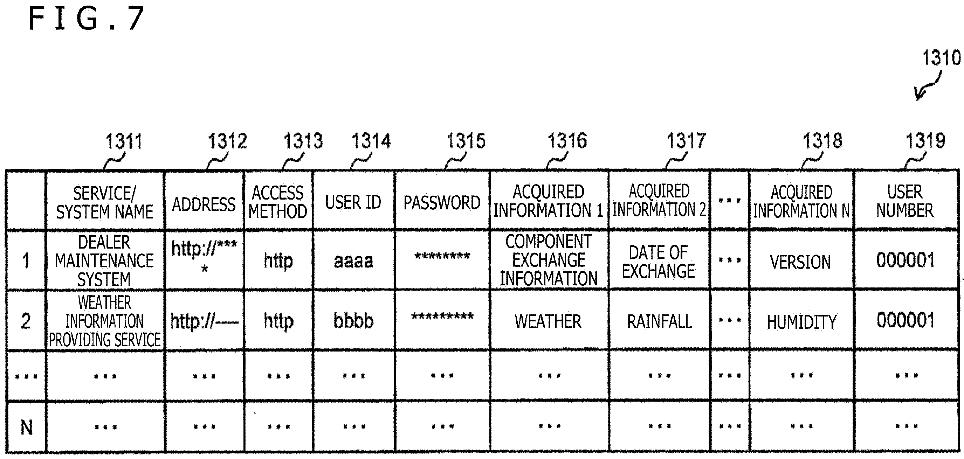

FIG. 7 is a diagram depicting one example of a table (an external service/external system information storage table 1310) that is stored in the external reference information storage DB 131 and that defines information necessary to make an access to the external service/external system 300.

Information including a service/system name 1311 indicating the name of a service or system to be accessed, an address 1312 indicating an address that is necessary to make access, an access method 1313 indicating a method for making access, a user ID 1314 indicating a user ID that is necessary to make access, a password 1315 indicating a password that is necessary to make access, acquired information 1316 to 1318 indicating information to be acquired as a result of the access, and a user number 1319, which are in association with one another, is stored in external service/external system information storage table 1310.

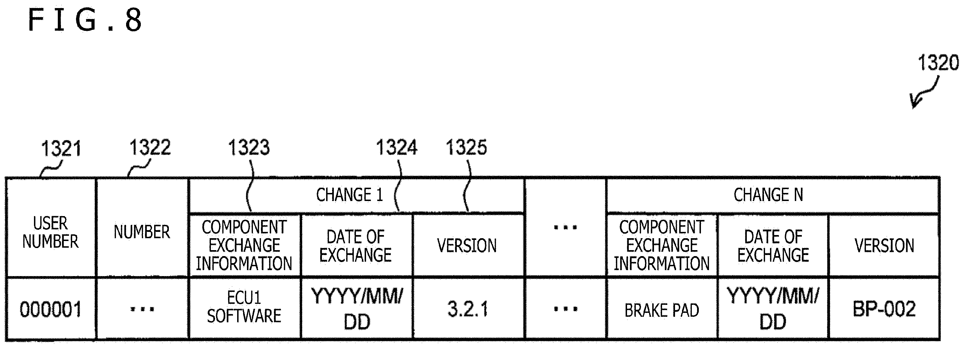

FIG. 8 is a diagram depicting one example of a table (a maintenance information storage table 1320) which is stored in the maintenance information storage DB 133 and in which information acquired from the automobile 200, the external service/external system 300, and the like, is stored.

Information including a user number 1321, a number 1322, one or more change-related information sets (component exchange information 1323, date of exchange 1324, a version 1325, and the like), which are in association with one another, is stored in the maintenance information storage table 1320.

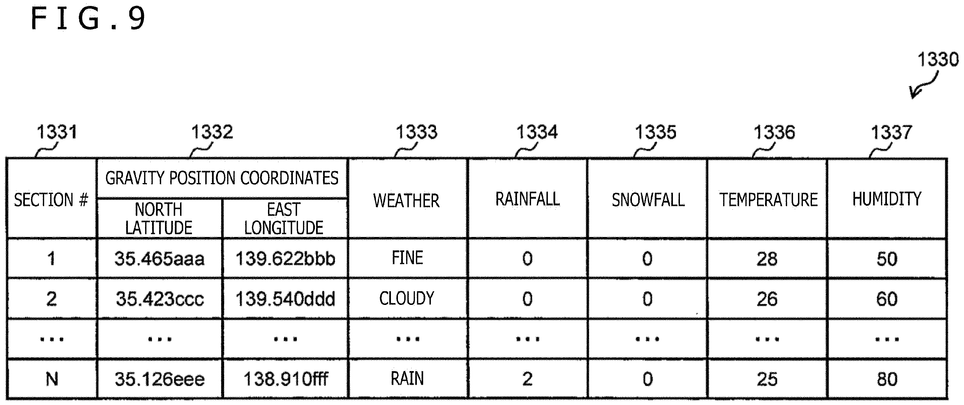

FIG. 9 is a diagram depicting one example of a table (a weather information storage table 1330) which is stored in the environment information storage DB 134 and in which information acquired from the external service/external system 300 is stored.

Information including a section 1331 representing a management number of one section from a departure place to a departure, gravity position coordinates 1332, weather 1333, a rainfall 1334, a snowfall 1335, a temperature 1336, and a humidity 1337, which are in association with one another, is stored in the weather information storage table 1330.

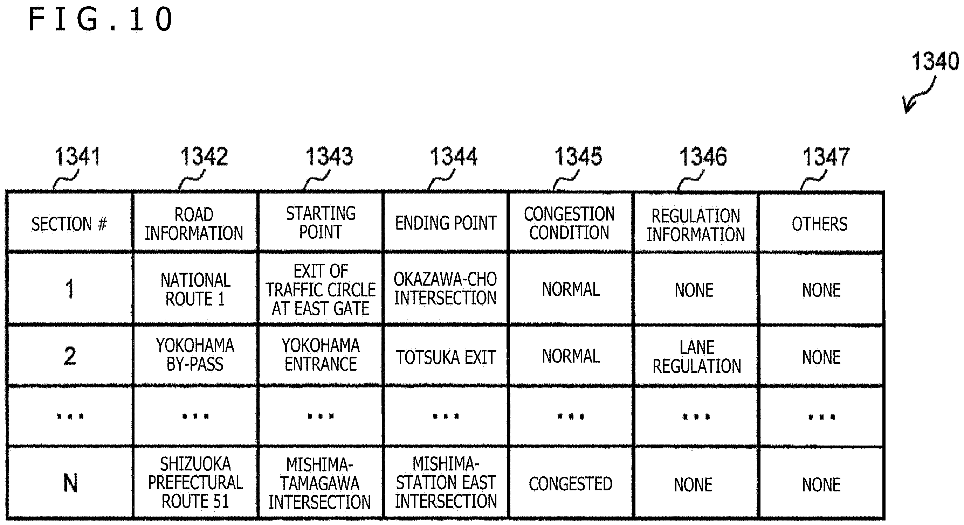

FIG. 10 is a diagram depicting one example of a table (a route division information/congestion information storage table 1340) which is stored in the route information storage DB 135 and in which information regarding divided routes is stored.

Information including a section 1341, road information 1342 indicating a road in the section, a starting point 1343 indicating the starting point of the section, an ending point 1344 indicating the ending point of the section, a congestion condition 1345 indicating the congestion condition of the section, regulation information 1346 indicating a regulation in the section, and others 1347 such as supplementary information, which are in association with one another, is stored in the route division information/congestion information storage table 1340.

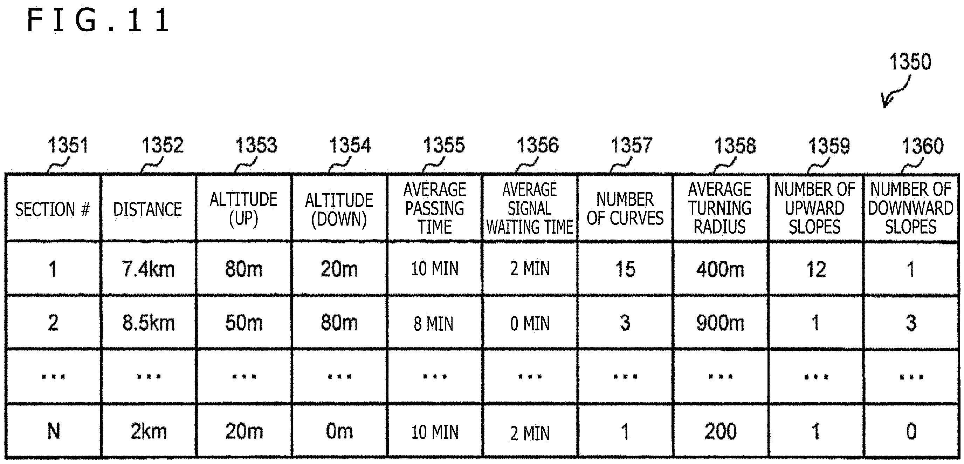

FIG. 11 is a diagram depicting one example of a table (a route information storage table 1350) which is stored in the route information storage DB 135 and in which information regarding divided routes is stored.

Information including a section 1351, a distance 1352 indicating the distance of the section, an altitude (up) 1353 indicating an altitude (up) obtained by integrating only distances by which traveling upward will be performed in the section, an indicating an altitude (down) 1354 obtained by integrating only distances by which traveling downward will be performed in the section, an average passing time 1355 indicating the average passing time in the section, an average signal waiting time 1356 indicating the average signal waiting time in the section, and the number of curves 1357 indicating the number of curves in the section, an average turning radius 1358 indicating the average of turning radii of curves in the section, the number of upward slopes 1359 indicating the number of upward slopes in the section, and the number of downward slopes 1360 indicating the number of downward slopes in the section, which are in association with one another, is stored in the route information storage table 1350.

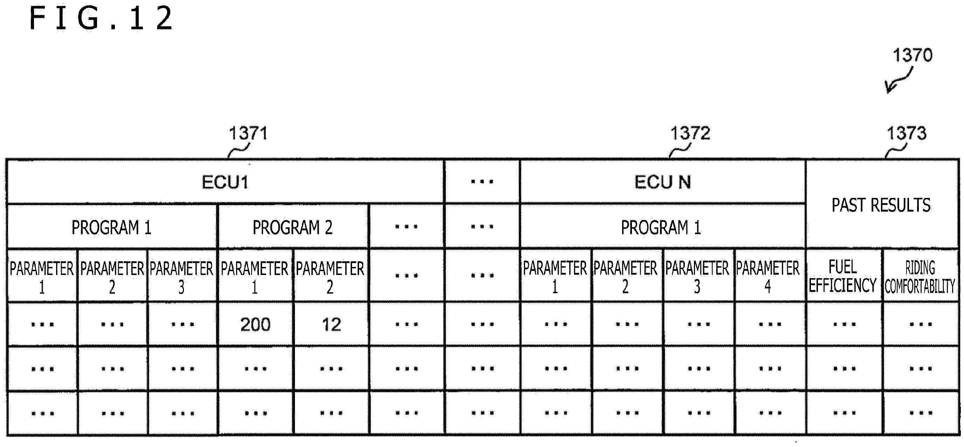

FIG. 12 is a diagram depicting one example of a computed result (a program update candidate/parameter candidate storage table 1370). The program update candidate/parameter candidate storage table 1370 depicted in FIG. 12 shows computed results of a prescribed section.

Information including program information columns (combinations each including a program and one or more parameters (set values) that can be set for the program) 1371, 1372 for holding conditions inspected by the model inspection/simulation unit 125, and a past result column 1373 in which computed results obtained under the corresponding conditions are stored, which are in association with one another, is stored in the program update candidate/parameter candidate storage table 1370.

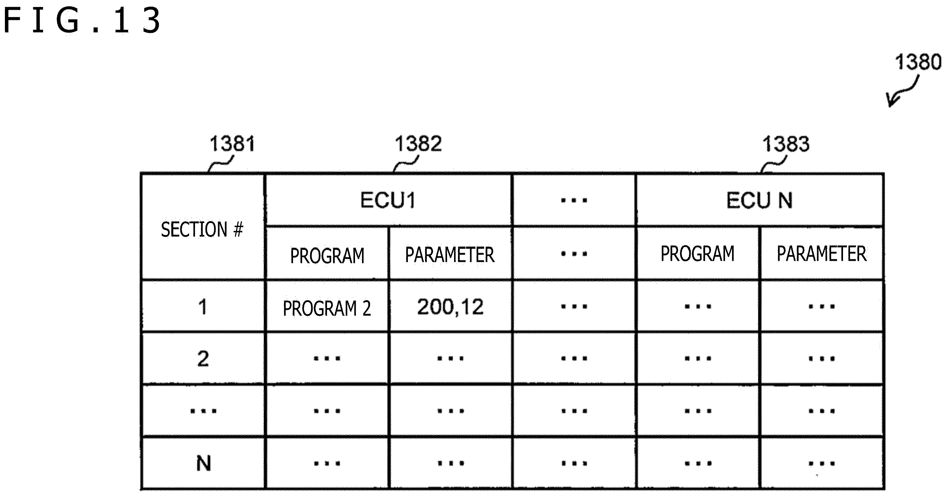

FIG. 13 is a diagram depicting one example of a table (a reply information table 1380) in which information is set by the reply information editing unit 126. Information including a section 1381, program information columns 1382, 1383 in which program-parameter combinations to be used in the section by the respective ECUs are stored, which are in association with one another, is stored in the reply information table 1380.

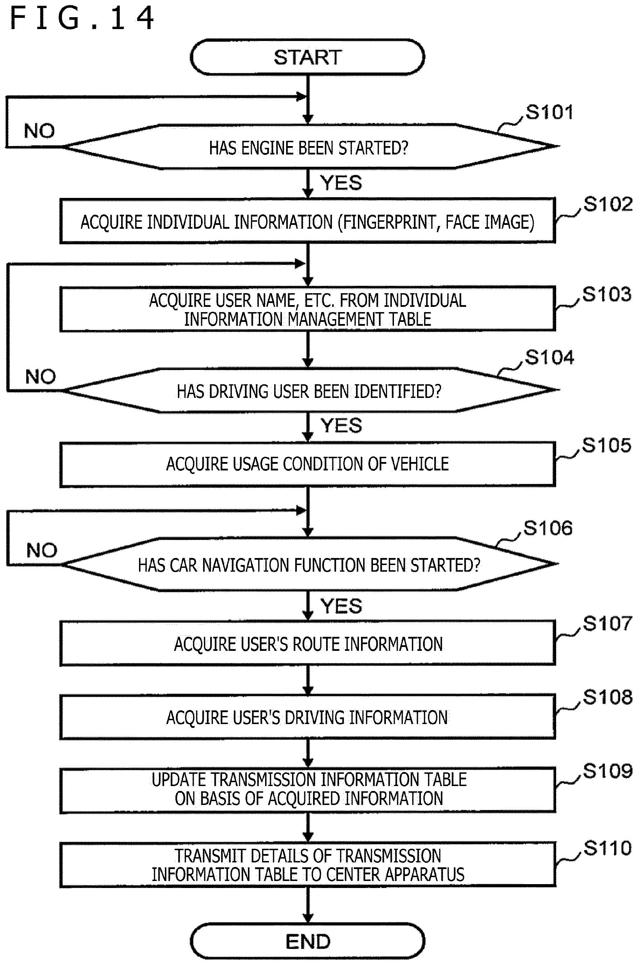

FIG. 14 is a diagram depicting one example of a processing procedure of a process which is executed by the automobile 200 and which is an information collecting process of collecting information that is necessary for the center apparatus 100 to optimize the automobile 200 and transmitting the information to the center apparatus 100.

First, at step S101, the automobile main control unit 2127 determines whether or not an engine of the automobile 200 has been started. When the automobile main control unit 2127 determines that the engine of the automobile 200 has been started, the process proceeds to step S102. When the automobile main control unit 2127 determines that the engine of the automobile 200 has not been started, the determination at step S101 is made again.

At step S102, the user information collecting unit 2121 acquires identification information (individual information) such as a fingerprint and a face image, from the fingerprint sensor 242, the fingerprint sensor 244, the camera 246, and the like. Then, the process proceeds to step S103.

At step S103, the automobile main control unit 2127 acquires a record (the user name 2221, the user number 2222, the fingerprint information 2223, and the face information 2224) of a process target saved in the format of the individual information management table 2220 depicted in FIG. 5, in the user information storage DB 2131. Then, the process proceeds to step S104.

At step S104, the automobile main control unit 2127 makes a comparison as to whether the individual information acquired at step S102 is identical to the individual information (the fingerprint information 2223 and/or the face information 2224) acquired at step S103, whereby a user who is conducting driving is identified. When the automobile main control unit 2127 identifies (acquires) the user who is conducting driving, the process proceeds to step S105. When the automobile main control unit 2127 fails to identify the user, the process target is changed, and then, the process proceeds to step S103.

At step S105, the vehicle information collecting unit 2123 collects vehicle information (use condition of the vehicle) such as the number, the vehicle number, the use period, the travel distance, the date of oil exchange, and the distance traveled by the automobile 200 after the oil exchange. Then, the process proceeds to step S106.

At step S106, the automobile main control unit 2127 determines whether or not the car navigation system 220 (car navigation function) has been started up. When it is determined that the startup is completed, the process proceeds to step S107. When it is determined that the startup is not completed, the determination at step S106 is made again.

At step S107, the car navigation information collecting unit 2122 acquires route information (a departure place, a destination, a route, and the like) inputted to the car navigation system 220. Then, the process proceeds to step S108.

At step S108, the driving information collecting unit 2125 acquires driving information indicating the characteristics of the user from the user information storage DB 2131. Then, the process proceeds to step S109.

At step S109, the automobile main control unit 2127 saves the details in the transmission information table 2230 depicted in FIG. 6 on the basis of the information acquired at step S103, the information acquired step S105, the information acquired step S107, and the information acquired step S108. Then, the process proceeds to step S110.

At step S110, the automobile main control unit 2127 transmits the details (transmission information) in the created transmission information table 2230 to the communication device 140 of the center apparatus 100 via the communication device 214. Then, the information collecting process is ended.

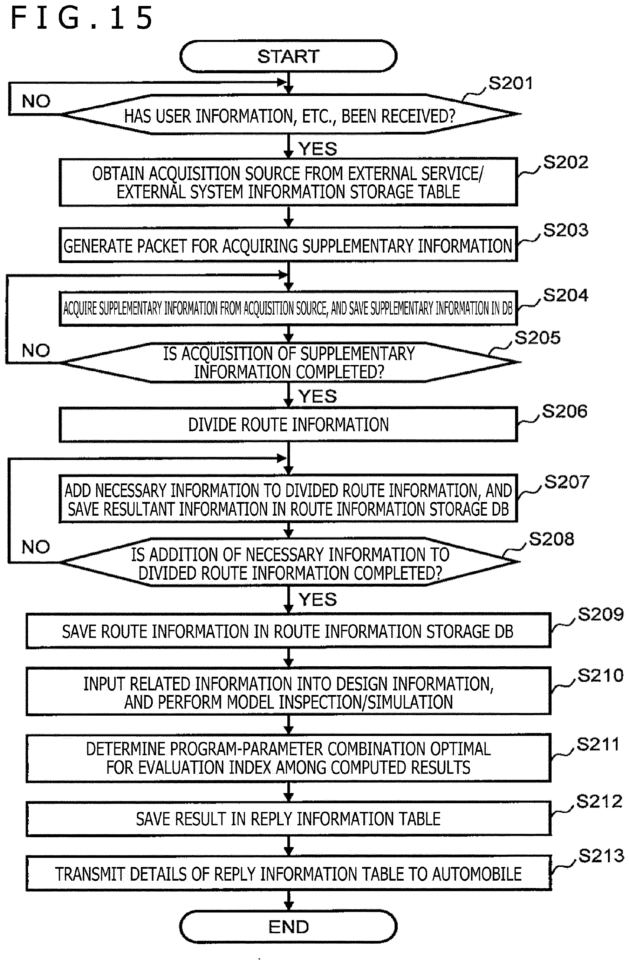

FIG. 15 is a diagram depicting one example of a processing procedure of a process which is executed by the center apparatus 100 and which is a program/parameter determining process of determining a program and a parameter for optimizing travel control of the automobile 200.

First, at step S201, the center apparatus main control unit 127 determines whether or not information (user information, and the like) that is necessary to optimize the automobile 200 has been received from the automobile 200. When the center apparatus main control unit 127 determines that the information has been received, the process proceeds to step S202. When the center apparatus main control unit 127 determines that the information has not been received, the determination at step S201 is made again. It is to be noted that the received information is stored in the user information storage DB 132 and the maintenance information DB 133, and the like.

At step S202, the supplementary information collecting unit 122 acquires, from the external service/external system information storage table 1310 depicted in FIG. 7 saved in the external reference information storage DB 131, information (one or more records) about an acquisition destination from which supplementary information is acquired. Then, the process proceeds to step S203.

At step S203, on the basis of the information about the acquisition destination acquired at step S202, the supplementary information collecting unit 122 makes access to the acquisition destination by using the access method 1313 for an acquisition time, the user ID 1314 that is necessary for the acquisition, and the password 1315 that is necessary for the acquisition, and generates a packet for acquiring, from the acquisition destination, supplementary information recorded in the acquired information 1316 to 1318. Then, the process proceeds to step S204.

At step S204, the supplementary information collecting unit 122 transmits the generated packet to the acquisition destination, and acquires the supplementary information, and saves the supplementary information in a prescribed DB (for example, the supplementary information is saved in the format of the maintenance information storage table 1320 depicted in FIG. 8 stored in the maintenance information storage DB 133). Then, the process proceeds to step S205.

At step S205, the supplementary information collecting unit 122 determines whether or not acquisition of the supplementary information is completed (whether or not processing for all the acquisition destinations acquired at step S202 has been performed). When it is determined that the acquisition is completed, the process proceeds to step S206. When it is determined that the acquisition is not completed, the process proceeds to step S204.

At step S206, on the basis of route information including the departure place 2233, the destination 2234, and the route 2235, which have been transmitted from the automobile 200 and which are necessary to optimize the automobile 200 and on the basis of the map information saved in the route information storage DB 135, the route information dividing unit 123 divides information about the route 2235 in view of distances, intersections, traffic signals, cities/wards/towns/villages, a combination thereof, and the like (in prescribed units). Then, the process proceeds to step S207.

At step S207, the route information updating unit 124 adds necessary information to (updates) the routes (sections) obtained by the dividing at step S206, and saves the resultant information in the route information storage DB 135. Then, the process proceeds to step S208. More specifically, the route information updating unit 124 updates the section 1341, the road information 1342 for traveling, the starting point 1343 of the section, and the ending point 1344 of the section, in the route division information/congestion information storage table 1340 depicted in FIG. 10 stored in the route information storage DB 135. Further, the route information updating unit 124 updates the congestion condition 1345, the regulation information 1346, and the others 1347 on the basis of the supplementary information acquired at step S204. It is to be noted that the environment information is changed to the format of the weather information storage table 1330 depicted in FIG. 9, for example.

At step S208, the route information updating unit 124 determines whether or not addition of the necessary information to all the routes obtained by dividing at step S206 is completed. When it is determined that the addition is completed, the process proceeds to step S209. When it is determined that the addition is not completed, the process proceeds to step S207.

At step S209, the route information updating unit 124 saves route information, by units of divided routes, in the form of the route information storage table 1350 depicted in FIG. 11 stored in the route information storage DB 135. Then, the process proceeds to step S210. The route information updating unit 124 saves information to be saved in the section 1351 to the number of downward slopes 1360, on the basis of the supplementary information acquired at step S204 and the map information saved in the route information storage DB 135.

At step S210, the model inspection/simulation unit 125 inputs related information into the design information (the operation model, the simulator, and the like), and conducts a model inspection and/or a simulation. Then, the process proceeds to step S212.

More specifically, on the basis of the program storage DB 136 and the design information storage DB 137, the model inspection/simulation unit 125 executes computing (a model inspection and/or a simulation) for all the program-parameter combinations related to evaluation indexes (fuel efficiency, riding comfortability, and the like) as shown in the program update candidate/parameter candidate storage table 1370 depicted in FIG. 12, under a condition for each of the sections, and records the computed results in the past result column 1373. The model inspection/simulation unit 125 records, in the program information columns 1371, 1372, the details of programs and parameters at the computing time.

At step S211, the model inspection/simulation unit 125 determines, from among the computed results, a program-parameter combination that is optimal for the evaluation indexes. Then, the process proceeds to step S212. More specifically, the model inspection/simulation unit 125 determines the best resultant value (highest value) for each of the sections on the basis of the results recorded in FIG. 12.

In the case where the evaluation indexes include multiple indexes, the highest value may be calculated with each of the indexes weighted, or the highest value may be calculated with the priority order of the indexes determined. Also, in the case where there are multiple highest values, the highest values may be transmitted to the car navigation system 220 of the automobile 200 via the communication device 140, and be displayed so as to allow a user to make a selection.

At step S212, as depicted in the reply information table 1380 depicted in FIG. 13, the model inspection/simulation unit 125 saves, in the program information columns 1382, 1383, a program-parameter combination that provides the highest value among the computed results in the past result column 1373, for each of the sections 1381. Then, the process proceeds to step S213.

At step S213, the reply information editing unit 126 transmits, to the automobile 200, the details of the reply information table 1380 collectively, or separately multiple times (e.g., on a section basis). Then, the program/parameter determining process is ended. More specifically, the reply information editing unit 126 transmits, to the automobile 200 via the communication device 140, reply information obtained by editing the information in the program information columns 1382, 1393 into a format that is executable in accordance with a travel route of the automobile 200.

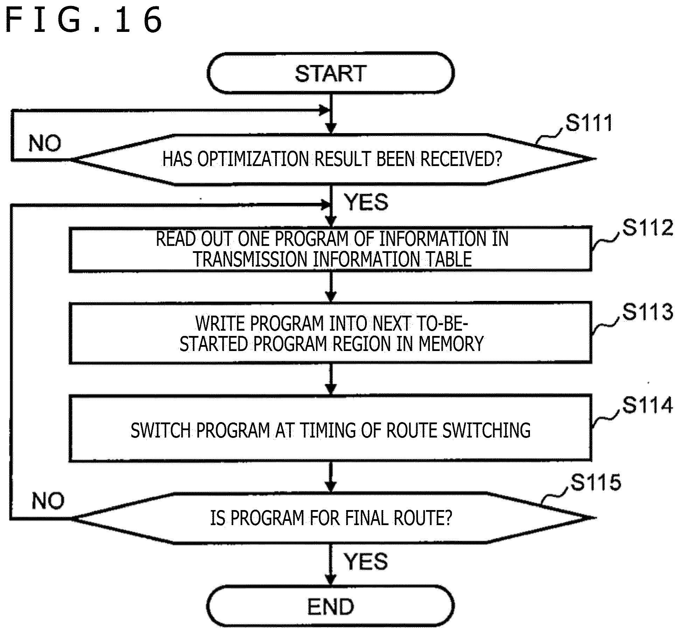

FIG. 16 is a diagram depicting one example of a processing procedure regarding an optimization executing process for reflecting an optimization result delivered from the center apparatus 100 to the automobile 200.

At step S111, the automobile main control unit 2127 determines whether or not an optimization result (a program-parameter combination) has been received from the center apparatus 100 via the communication device 214. When the automobile main control unit 2127 determines that an optimization result has been received, the process proceeds to step S112. When the automobile main control unit 2127 determines that an optimization result has not been received, the determination at step S111 is made again.

At step S112, the program/parameter reflecting unit 2126 reads out a combination of a program to be started next and the corresponding parameter, from the received optimization result on the basis of the current position information about the automobile 200. Then, the process proceeds to step S113.

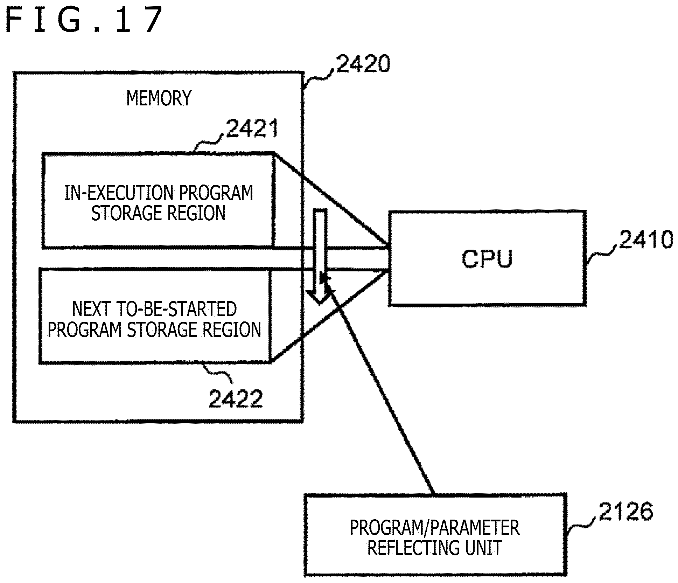

At step S113, the program/parameter reflecting unit 2126 writes, at a route switching timing, the program and the parameter corresponding to the program into a next to-be-started program storage region 2422 in the memory 2420 of each ECU, as depicted in FIG. 17. Then, the process proceeds to step S114.

At step S114, a CPU 2410 of each ECU switches the program in execution to the program to be started next. Then, the process proceeds to step S115.

At step S115, the program/parameter reflecting unit 2126 determines whether or not the started program is for the final route. When the program/parameter reflecting unit 2126 determines that the program is for the final route, the optimization executing process is ended. When program/parameter reflecting unit 2126 determines that the program is not for the final route, the process proceeds to step S112.

FIG.17 is a diagram depicting one example of program and parameter switching. The memory 2420 of each ECU includes an in-execution program storage region 2421 in which a program that is currently in execution is stored, and the next to-be-started program storage region 2422 in which a program to be started next is stored. At a route switching timing, the program/parameter reflecting unit 2126 stores a program in the next to-be-started program storage region 2422.

It is to be noted that the memory 2420 may be a RAM, or may be a ROM. That is, the memory 2420 may be configured to temporarily rewrite a program and a parameter, or may be configured to hold a program and a parameter.

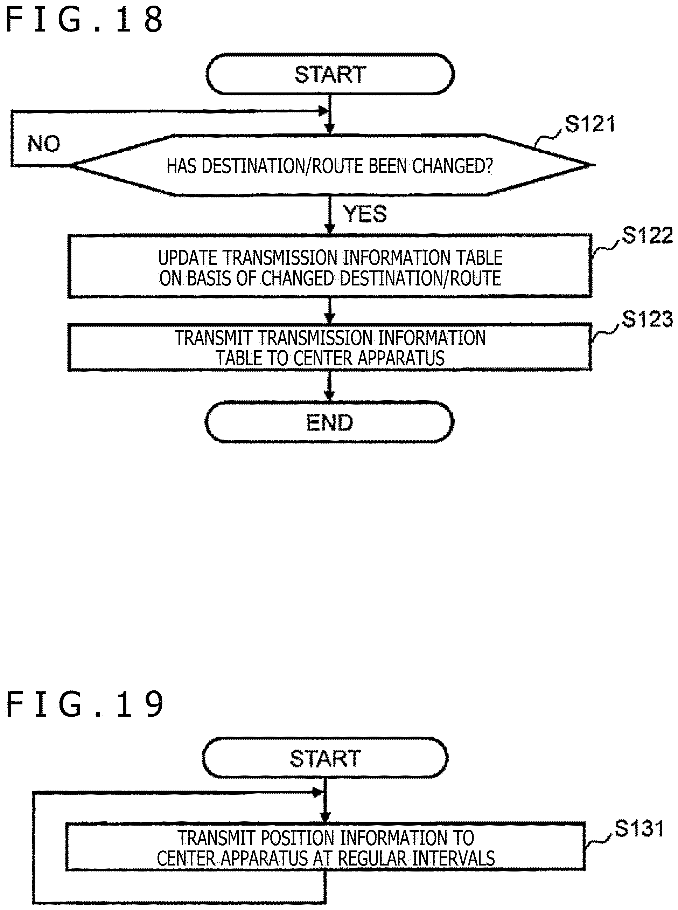

FIG. 18 is a diagram depicting one example of a processing procedure of a process which is executed by the automobile 200 and which is a re-optimization request process for collecting information that is necessary for the center apparatus 100 to re-optimize the automobile 200 and transmitting the information to the center apparatus 100.

First, at step S121, the automobile main control unit 2127 determines whether or not a destination and/or a route has been changed by the car navigation system 220 itself or by a user. When the automobile main control unit 2127 determines that the destination and/or the route has been changed, the process proceeds to step S122. When the automobile main control unit 2127 determines that neither the destination nor the route has been changed, the determination at step S121 is made again.

At step S122, the automobile main control unit 2127 changes route information including the departure place 2233, the destination 2234, and the route 2235 in the transmission information table 2230 on the basis of the current position, the changed destination, and/or the changed route. Then, the process proceeds to step S123.

At step S123, the automobile main control unit 2127 transmits the details in the created transmission information table 2230 to the communication device 140 of the center apparatus 100 via the communication device 214. Then, the re-optimization request process is ended.

It is to be noted that, when a travel route for the automobile 200 is changed and the details in the transmission information table 2230 are transmitted, the program/parameter determining process depicted in FIG. 15 is executed. That is, environment information regarding the changed route is acquired, the changed route information is divided into multiple sets, an information update is performed for each of the divided sets of the changed route information, a computation is executed for each of the updated route information sets on the basis of the updated route information, the maintenance information, and the collected environment information, and a program-parameter combination that provides an optimal result is determined for each of the updated route information sets.

According to the present embodiment, route information is divided (broken up), and then, a computation is executed therefor, whereby an effect for an evaluation index can be precisely predicted so that travel control that is optimal for the evaluation index can be performed.

In addition, a model inspection and/or a simulation is conducted to investigate the details of a changed program and a changed parameter so that a program and a parameter from which the best investigation result has been obtained can be delivered. Accordingly, an effect that is appropriate for the actual situation can be obtained.

An improvement effect for a target index varies not only according to a road condition and how to decide a route to a destination, but also according to the driving-time characteristics of a user. This may lead to a problem that an expected result is not obtained. To this end, a program and a parameter may be determined for a target evaluation index while the driving-time characteristics (driving information) of a user are further taken into consideration. With this configuration, an effect that matches user driving can be obtained.

### (2) Second embodiment

In the first embodiment, the center apparatus 100 delivers computed results collectively. In the present embodiment, an investigation of a certain section is conducted by the model inspection/simulation unit 125 with use of real-time environment information about a section (e.g., the immediately preceding section) prior to the certain section, and a result of the investigation is delivered to the automobile 200 before the automobile 200 enters the section which is an optimization target.

FIG. 19 is a diagram depicting one example of a processing procedure regarding a real-time information collecting process for performing optimization with use of real-time information.

At step S131, the position information collecting unit 2124 acquires current position information at regular intervals from the car navigation system 220, a position information acquiring device (not depicted), or the like, and the automobile main control unit 2127 transmits the current position information to the center apparatus 100. The center apparatus 100 collects environment information on the basis of the current position information, and saves the environment information in the environment information storage DB 134. As a result, the model inspection/simulation unit 125 can conduct a model inspection and/or a simulation by using the real-time (the latest) environment information.

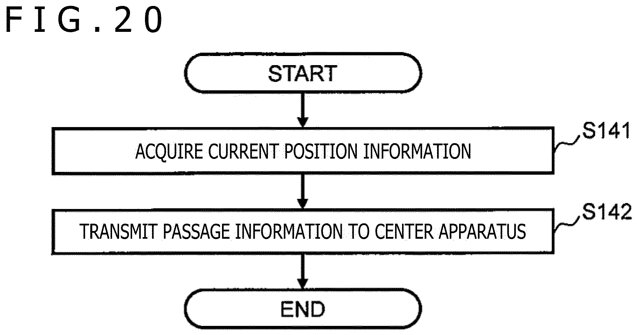

A method for acquiring the real-time environment information is not limited to the aforementioned one. For example, instead of adopting a configuration of transmitting position information at regular intervals, the automobile 200 may preliminarily receive information about divided routes (sections) from the center apparatus 100, and transmit, at a timing at which one of the routes is passed, information indicating that the one route is passed to the center apparatus 100, as depicted in FIG. 20.

FIG. 20 is a diagram depicting one example of a processing procedure regarding a real-time information collecting process for performing optimization with use of real-time information.

At step S141, the position information collecting unit 2124 acquires current position information.

At step S142, the automobile main control unit 2127 transmits, at a timing at which one of routes is passed, information indicating that the route is passed to the center apparatus 100.

With this configuration, the number of times of performing communication between the center apparatus 100 and the automobile 200 can be reduced, compared to the case where position information is transmitted at regular intervals.

According to the present embodiment, environment information is acquired in real time. Therefore, besides the effects by the first embodiment, optimization of the automobile 200 can be implemented with higher precision.

### (3) Third embodiment

In the first embodiment, the center apparatus 100 delivers computation results to the automobile 200 after all the computations are finished. In the present embodiment, each time a model inspection and/or a simulation for one section is finished, the center apparatus 100 delivers the details (one record) in the transmission information table 2230.

According to the present embodiment, optimization of the automobile 200 can be more quickly applied.

### (4) Other embodiments

It is to be noted that, in each of the aforementioned embodiments, the case where the present invention is applied to the vehicle optimizing system 1 has been described. However, the present invention is not limited to this case, and is widely applicable to other various types of vehicle optimizing systems.

In addition, the case where route information is divided in prescribed units has been described in each of the above embodiments. However, the present invention is not limited to this case. Without being divided, route information may be used as it is. Also in this case, an effect to be provided by a program-parameter combination is preliminarily computed, and a change is made in accordance with a program-parameter combination that is optimal for an evaluation index. Accordingly, travel control that is optimal for an evaluation index can be performed.

Further, the reply information editing unit 126 has been explained as one example of a communication unit in each of the above embodiments. However, the present invention is not limited to this. Another unit in the center apparatus 100 may serve as a communication unit, or a communication unit may be provided.

In addition, the automobile main control unit 2127 has been explained as one example of a communication unit in each of the above embodiments. However, the present invention is not limited to this. Another unit in the automobile 200 may serve as a communication unit, or a communication unit may be provided.

Moreover, the case where fingerprint information and/or an image is acquired to identify a user has been explained in each of the above embodiments. However, the present invention is not limited to this case. In addition to or in place of this identification, another biometric authentication using a voice print, a retina, or the like may be used, or another authentication technology may be used.

In addition, the case where route division is followed by acquisition of supplementary information has been explained in each of the above embodiments. However, the present invention is not limited to this case. Acquisition of supplementary information may be followed by route division.

Further, in each of the above embodiments, the XX tables have been used to explain various data, for the convenience of explanation. However, no limitation is imposed on the data structure. An expression: XX information may be used instead.

Moreover, information such as programs, tables, and files for implementing the functions in the above explanation may be held in a memory, in a storage device such as a hard disk or an SSD, or in a recording medium such as an IC card, an SD card, or a DVD.

Also, in the aforementioned configurations, making a modification, recombining, combining, or omitting can be performed, as appropriate, within the gist of the present invention.

### [Reference Signs List]

- 1:: Vehicle optimizing system
- 100:: Center apparatus
- 200:: Automobile

## Claims

1. A vehicle optimizing system comprising:
a route information storage DB in which route information indicating a travel route for a vehicle is saved;
a maintenance information storage DB in which maintenance information regarding maintenance of the vehicle is saved;
an environment information storage DB in which environment information regarding the route is saved;
a program storage DB in which a program to be used in the vehicle is saved;
a computation unit that executes, based on the route information, the maintenance information, and the environment information, computing of evaluation indexes regarding optimization of travel control of the vehicle for respective cases each obtained by making a change in a program-parameter combination for the vehicle, and that determines a program-parameter combination which provides an optimal result among the computed results; and
a communication unit that transmits, to the vehicle, the program-parameter combination determined by the computation unit.

2. The vehicle optimizing system according to claim 1, further comprising:
a route information dividing unit that divides the route information in prescribed units; and
a route information updating unit that performs an information update for each of the route information sets divided by the route information dividing unit, wherein
the computation unit executes, based on the route information updated by the route information updating unit, the maintenance information, and the environment information, computing for each of the updated route information sets, and determines a program-parameter combination which provides an optimal result for each of the updated route information sets.

3. The vehicle optimizing system according to claim 2, further comprising
a supplementary information collecting unit that, when the travel route for the vehicle is changed, acquires environment information regarding the changed route, wherein
the route information dividing unit divides the changed route information,
the route information updating unit performs an information update for each of the changed route information sets divided by the route information dividing unit, and
the computation unit executes, based on the route information updated by the route information updating unit, the maintenance information, and the environment information collected by the supplementary information collecting unit, computing for each of the update route information sets, and determines a program-parameter combination which provides an optimal result for each of the update route information sets.

4. The vehicle optimizing system according to claim 2, further comprising
a supplementary information collecting unit that acquires, in real time, environment information regarding the route information sets divided by the route information dividing unit, wherein
the computation unit executes, based on the route information updated by the route information updating unit, the maintenance information, and the environment information collected by the supplementary information collecting unit, computing for each of the updated route information sets, and determines a program-parameter combination which provides an optimal result for each of the update route information sets.

5. A vehicle optimizing apparatus comprising:
a route information storage DB in which route information indicating a travel route for a vehicle is saved;
a maintenance information storage DB in which maintenance information regarding maintenance of the vehicle is saved;
an environment information storage DB in which environment information regarding the route is saved;
a program storage DB in which a program to be used in the vehicle is saved;
a computation unit that executes, based on the route information, the maintenance information, and the environment information, computing of evaluation indexes regarding optimization of travel control of the vehicle for respective cases each obtained by making a change in a program-parameter combination for the vehicle, and that determines a program-parameter combination which provides an optimal result among the computed results; and
a communication unit that transmits, to the vehicle, the program-parameter combination determined by the computation unit.
